# EUROPEAN PATENT APPLICATION

(11) **EP 1 740 003 A1**
(43) Date of publication of application: **03.01.2007**
(21) Application number: 05721707.7
(22) Date of filing: 29.03.2005
(51) Int. Cl.: H04Q 7/38, H04M 15/00, H04Q 7/34

(54) **WIRELESS COMMUNICATION NETWORK SYSTEM, AND COMMUNICATION SERVICE PROVIDING METHOD, PROGRAM AND RECORDING MEDIUM FOR THE SYSTEM**

(30) Priority: 31.03.2004 JP 2004106213
(71) Applicant: NEC CORPORATION, Minato-ku, Tokyo 108-8001 (JP)
(72) Inventor: ISHIKAWA, Yasuaki, Tokyo (JP)
(74) Representative: Vossius & Partner
(86) International application number: PCT/JP2005/006568
(87) International publication number: WO 2005/096656

(57) **Abstract**

User-authentication data, terminal information, and encoded information are received through infrared communication and/or communication using an IC card, a position-registration request is made to a micro radio-base station 2 on the basis of the received information, and communication performed between a mobile terminal 3 and a micro radio-base-station device is controlled.

## Description

### Technical Field

The present invention relates to a wireless-communication-network system using a mobile phone and particularly relates to a wireless-communication network system that allows for simplifying a user-authentication operation necessary to use a micro radio-base station, as a hot spot, and that allows for increasing the communication confidentiality, a communication-service-providing method used in the system, and a program, and a recording medium.

### Background Art

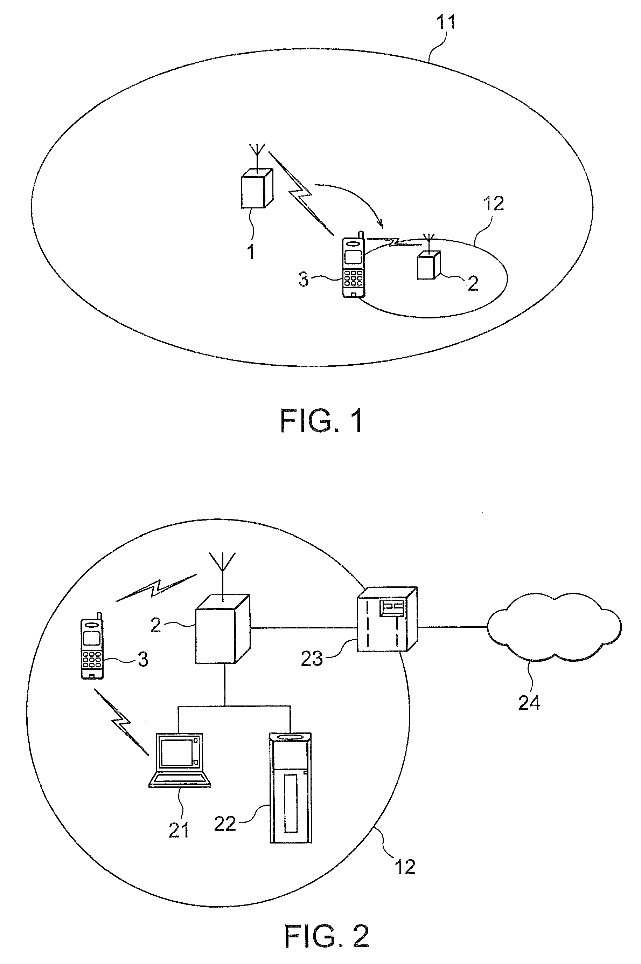

Known technology problems which occur when user authentication is performed by installing and/or operating a micro radio-base station for a specified user in a mobile-phone system will be described with reference to Fig. 1.

A micro cell 12 including a micro radio-base station 2 provided for a specified user, such as a hot spot, exists in a cell 11 including a radio-base-station device 1 of a cellular mobile phone system. The position of a mobile terminal 3 is registered with the cell 11. The mobile terminal 3 tries to perform handover to the micro radio-base-station device 2 by moving near the micro cell 12.

Please refer to Japanese Unexamined Patent Application Publication No. 2002-315058, as a document related to the above-described known system.

The following problems occur in the above-described known mobile-phone system.

The first problem is that the micro cell 12 is provided for the specified user and a user using the mobile terminal 3 needs to be identified, and registered and/or rejected. According to the above-described patent document, when the user is registered with the micro radio-base-station device 2 which is the hot spot, a mobile terminal to be used is registered in advance, as a member, and the user has to input an identification password received at a checkout station via the web, which is not suitable for the hot spot used for an indefinite number of users.

The second problem is that the communication fee is higher than that of communication performed by using an ADSL and/or optical fibers so that a small-scale and low-cost communication system such as a micro radio-base station including the hot spot or the like needs to be constructed.

The third problem is that a confidentiality problem occurs in a radio-communication scheme typified by W-CDMA or the like in all probability. Therefore, encoding processing must be performed strictly.

Further, if the micro radio-base station is used according to the same method as is the case with the hot spot and if it is wanted to determine a user of the micro radio-base-station device, a handover from a user staying in an adjacent cell needs to be registered and/or rejected in some manner. In the known mobile-phone system, handovers from an indefinite number of users are accepted by a host device, and the micro radio-base-station device cannot handle the handovers with flexibility.

When accessing the Internet through a mobile phone by using a known charge system, the communication fee becomes higher than those for a fixed phone, communication performed by using the ADSL, the optical fiber, and so forth, which puts an enormous load on a user.

Further, a communication standard (for example, 3GPP for W-CDMA) is established for a communication scheme used for the mobile-phone system and communication is performed by the standard. Therefore, even though strict encoding is performed by the standard while data is transmitted and/or received, there may be a possibility that the data is decoded.

Therefore, an object of the present invention is to provide a wireless-communication network system that is low-cost, and capable of concealing information and accessing the Internet easily, such as the hot spot, a communication-service-providing method used in the system, a program, and a recording medium.

### Disclosure of Invention

For solving the above-described problems, according to the present invention, user-authentication data, terminal information, and encoded information are obtained via infrared communication and/or communication performed by using an IC card in a wireless-communication network system using a mobile phone. Then, a position-registration request is issued to a micro radio-base station such as a hot spot on the basis of the obtained data and communication performed between the micro radio-base station and a terminal for the communication is controlled.

Here, the present invention uses means for solving problems having the following characteristics.

According to a first mode, in a wireless-communication network system including a radio-base-station device, a mobile terminal, an authentication terminal, a controller having a function of generating and/or deleting user-authentication data of the mobile terminal, and a micro radio-base-station device which passes on data between the mobile terminal and a communication network,
the controller determines whether or not a utilization request transmitted from the authentication terminal is accepted, and transmits the user-authentication data when the utilization request is accepted, or a rejection notification when the utilization request is not accepted to the mobile terminal via the authentication terminal, and
transmits a user-registration-procedure-completion notification to the mobile terminal via the authentication terminal and performs processing for charging a user a utilization fee when a user-authentication-data-reception-completion notification is transmitted from the mobile terminal.

According to a second mode, the micro radio-base-station device
receives position-registration-request data to which the user-authentication data is attached from the mobile terminal, compares the user-authentication data and terminal information that are included in the position-registration-request data with a database included in the controller, performs position registration when the user-authentication data and the terminal information agree with the database, and transmits a position-registration-completion notification to the mobile terminal and the controller, and
radio communication is started between the mobile terminal which received the position-registration-completion notification and the micro radio-base-station device.

According to a third mode, the mobile terminal
transmits utilization-finish-request data to the controller via the micro radio-base-station device, or the ordering terminal,
the controller cancels the registered position of the mobile terminal which received the utilization-finish notification, invalidates the user-authentication data, and transmits a utilization-finish-procedure-completion notification to the mobile terminal via the micro-radio-base-station device and/or the ordering terminal,
when the utilization fee is paid on time, the controller performs processing for charging the user the utilization fee, and transmits the utifization-finish-procedure-completion notification and utilization-fee-statement data to the mobile terminal, and
the mobile terminal invalidates the user-authentication data and finishes communicating with a hot spot.

According to a fourth mode, the data transmission and/or reception is performed between the mobile terminal and the authentication terminal by using a communication scheme other than radio communication.

According to a fifth mode, the communication scheme other than the radio communication is infrared communication and/or communication using an IC card.

According to a sixth mode, in a wireless-communication network system including a radio-base-station device, a mobile terminal, an authentication terminal, a controller having a function of generating and/or deleting user-authentication data of the mobile terminal, and a micro radio-base-station device which passes on data between the mobile terminal and a communication network,
the controller
determines whether or not a utilization request transmitted from the authentication terminal is accepted, and transmits the user-authentication data when the utilization request is accepted, or a rejection notification when the utilization request is not accepted to the mobile terminal via the authentication terminal,
transmits encoded-information data used for radio communication performed between the micro-radio-base-station device and the mobile terminal to the mobile terminal upon receiving user-authentication-data-reception completion notification transmitted from the mobile terminal, and
transmits a user-registration-procedure-completion notification to the mobile terminal via the authentication terminal and performs processing for charging a user a utilization fee upon receiving an encoded-information-reception-completion notification transmitted from the mobile terminal.

According to a seventh mode, the micro radio-base-station device
receives position-registration-request data transmitted from the mobile terminal, where the user-authentication data is attached to the position-registration-request data, compares the user-authentication data and terminal information that are included in the position-registration-request data with a database included in the controller, performs position registration when the user-authentication data and the terminal information agree with the database, and transmits a position-registration-completion notification to the mobile terminal and the controller, and
radio communication is started between the mobile terminal which received the position-registration-completion notification and the micro radio-base-station device on the basis of the encoded-information data.

According to an eighth mode, the mobile terminal
transmits utilization-finish-request data to the controller via the micro radio-base-station device, or the ordering terminal,
the controller cancels the registered position of the mobile terminal which received the utilization-finish notification, invalidates the user-authentication data and the encoded-information data, and transmits a utilization-finish-procedure-completion notification to the mobile terminal via the micro radio-base-station device and/or the ordering terminal,
when the utilization fee is paid on time, the controller performs processing for charging the user the utilization fee, and transmits the utilization-finish-procedure-completion notification and utilization-fee-statement data to the mobile terminal, and
the mobile terminal invalidates the user-authentication data and the encoded-information data, and finishes communicating with a hot spot.

According to a ninth mode, the communication network includes the Internet, an intranet, and a LAN.

According to a tenth mode, a controller of a wireless-communication network system that is connected to an authentication terminal and a micro radio-base station and that passes on data between a mobile terminal and a communication network is provided.

The controller includes a function of generating and/or deleting user-authentication data of the mobile terminal,
determines whether or not a utilization request transmitted from the authentication terminal is accepted, and transmits the user-authentication data when the utilization request is accepted, or a rejection notification when the utilization request is not accepted to the mobile terminal via the authentication terminal, and
transmits a user-registration-procedure-completion notification to the mobile terminal via the authentication terminal and performs processing for charging a user a utilization fee upon receiving a user-authentication-data-reception completion notification transmitted from the mobile terminal.

According to an eleventh mode, a controller of a wireless-communication network system that is connected to an authentication terminal and a micro radio base station and that passes on data between a mobile terminal and a communication network is provided.

The controller includes a function of generating and/or deleting user-authentication data of the mobile terminal,
determines whether or not a utilization request transmitted from the authentication terminal is accepted, and transmits the user-authentication data when the utilization request is accepted, or a rejection notification when the utilization request is not accepted to the mobile terminal via the authentication terminal,
transmits encoded-information data used for radio communication performed between the micro radio-base-station device and the mobile terminal to the mobile terminal when a user-authentication-data-reception completion notification is transmitted from the mobile terminal, and
transmits a user-registration-procedure-completion notification to the mobile terminal via the authentication terminal and performs processing for charging a user a utilization fee when an encoded-information-reception-completion notification is transmitted from the mobile terminal.

According to a twelfth mode, a communication-service-providing method used in a wireless-communication network system constructed between a mobile terminal and a micro radio-base-station device via a communication network is provided.

The communication-service-providing method includes a step of determining whether or not a utilization request transmitted from an authentication terminal connected to the micro radio-base-station device is accepted, and transmitting the user-authentication data when the utilization request is accepted, or a rejection notification when the utilization request is not accepted to the mobile terminal via the authentication terminal,
a step of transmitting a user-authentication-data-reception-completion notification to a controller connected to the micro radio-base-station device upon receiving the user-authentication data,
a step of transmitting encoded-information data used for radio communication performed between the micro radio-base-station device and the mobile terminal upon receiving the user-authentication-data-reception-completion notification,
a step of transmitting an encoded-information-reception-completion notification to the controller via the authentication terminal upon receiving the encoded-information data, and
a step of receiving the encoded-information-reception-completion notification, transmitting a user-registration-procedure-completion notification to the mobile terminal via the authentication terminal, and performing processing for charging a user a utilization fee.

According to a thirteenth mode, a step of transmitting position-registration-request data including the user-authentication data and terminal information from the mobile terminal,
a step of comparing the user-authentication data and the terminal information that are included in the transmitted position-registration-request data with a database included in the controller,
a step of performing position registration and transmitting a position-registration-completion notification to the mobile terminal and the controller when the user-authentication data and the terminal information agree with the database, and
a step of starting the radio communication between the mobile terminal which received the position-registration-completion notification and the micro radio-base-station device are provided.

According to a fourteenth mode, a step of transmitting utilization-finish-request data from the mobile terminal to the controller,
a step of cancelling the registered position of the mobile terminal which received a utilization-finish notification transmitted from the controller,
a step of invalidating the user-authentication data and the encoded-information data,
a step of transmitting a utilization-finish-procedure-completion notification to the mobile terminal,
a step of performing processing for charging the user the utilization fee when the utilization fee is paid on time,
a step of transmitting the utilization-finish-procedure-completion notification and utilization-fee-statement data to the mobile terminal, and
a step of invalidating the user-authentication data and the encoded-information data, and finishing the communication after receiving the utilization-finish-procedure-completion notification are provided.

According to a fifteenth mode, an invention disclosed in Claim 15 is characterized in that the communication network includes the Internet, an intranet, and a LAN.

According to a sixteenth mode, a program which makes a computer perform communication-service-providing processing in a wireless-communication network system constructed between a mobile terminal and a micro radio-base-station device via a communication network is provided.

The program includes a step of determining whether or not a utilization request transmitted from an authentication terminal connected to the micro radio-base-station device is accepted, and transmitting the user-authentication data when the utilization request is accepted, or a rejection notification when the utilization request is not accepted to the mobile terminal via the authentication terminal,
a step of transmitting a user-authentication-data-reception-completion notification to a controller connected to the micro radio-base-station device upon receiving the user-authentication data,
a step of transmitting encoded-information data used for radio communication performed between the micro radio-base-station device and the mobile terminal upon receiving the user-authentication-data-reception-completion notification,
a step of transmitting encoded-information-reception-completion notification to the controller via the authentication terminal upon receiving the encoded-information data, and
a step of receiving the encoded-information-reception-completion notification, transmitting a user-registration-procedure-completion notification to the mobile terminal via the authentication terminal, and performing processing for charging a user a utilization fee.

According to a seventeenth mode, a step of transmitting position-registration-request data including the user-authentication data and terminal information from the mobile terminal,
a step of comparing the user-authentication data and the terminal information that are included in the transmitted position-registration-request data with a database included in the controller,
a step of performing position registration and transmitting a position-registration-completion notification to the mobile terminal and the controller when the user-authentication data and the terminal information agree with the database, and
a step of starting the radio communication between the mobile terminal which received the position-registration-completion notification and the micro radio-base-station device are further performed.

According to an eighteenth mode, a step of transmitting utilization-finish-request data from the mobile terminal to the controller,
a step of cancelling the registered position of the mobile terminal which received a utilization-finish notification transmitted from the controller,
a step of invalidating the user-authentication data and the encoded-information data,
a step of transmitting a utilization-finish-procedure-completion notification to the mobile terminal,
a step of performing processing for charging the user the utilization fee when the utilization fee is paid on time,
a step of transmitting the utilization-finish-procedure-completion notification and utilization-fee-statement data to the mobile terminal, and
a step of invalidating the user-authentication data and the encoded-information data, and finishing the communication after receiving the utilization-finish-procedure-completion notification are further performed.

According to a nineteenth mode, a computer-readable information-recording medium (including a compact disk, a flexible disk, a hard disk, a magneto-optical disk, a digital video disk, a magnetic tape, and a semiconductor memory) on which the program is recorded is provided.

### Brief Description of the Drawing:

Fig. 1 shows the configuration of a cellular mobile-phone system.
Fig. 2 shows the configuration of a micro cell provided in a system according to an embodiment of the present invention.
Fig. 3 is a sequential diagram illustrating operations of user-authentication processing performed in the system according to the embodiment of the present invention.
Fig. 4 is a sequential diagram illustrating operations of user-authentication processing performed in the system according to the embodiment of the present invention.
Fig. 5 is a sequential diagram illustrating operations of user-authentication processing performed in the system according to the embodiment of the present invention.
Fig. 6 shows the configuration of a micro cell provided in a system according to another embodiment of the present invention.
Fig. 7 is a sequential diagram illustrating operations of user-authentication processing performed in the system according to another embodiment of the present invention.
Fig. 8 is a sequential diagram illustrating operations of user-authentication processing performed in the system according to another embodiment of the present invention.
Fig. 9 is a sequential diagram illustrating operations of user-authentication processing performed in the system according to another embodiment of the present invention.

### Best Mode for Embodying the Invention

Hereinafter, embodiments of the present invention will be described with reference to drawings.

According to the present invention, in a wireless internet system using a mobile phone, user-authentication operations required to use a micro radio-base station, as a hot spot, is simplified and the communication confidentiality is increased.

Characteristics of the present invention will be described with reference to Figs. 1 and 2. As shown in Fig. 1, a cell 11 including a radio-base-station device 1 of a cellular-mobile-phone system and a micro cell 12 including a micro radio-base-station device 2 provided in the cell 11 are provided. The micro cell 12 is provided, as a cell that provides a high-speed internet connection environment to a specified user, such as a hot spot, at a low cost. A mobile terminal 3 of which position is registered with the cell 11 tries to perform handover to the micro radio-base station 2, so as to move near the micro cell 12 and/or use the hot spot.

Referring to Fig. 1, an embodiment of the present invention is shown, wherein the micro radio-base-station device is used, as the hot spot, so as to make a profit. The cell 11 including the radio-base-station device 1 of the cellular mobile-phone system and the micro cell 12 including the micro radio-base-station device 2 provided in the cell 11 are provided.

According to the embodiment, the micro cell 12 is generated, as a cell which provides a specified user such as a for-profit hot spot with a high-speed internet-connection environment at a low cost. The mobile terminal 3 of which position is registered with the cell 11 tries to perform handover to the micro radio-base-station device 2, so as to move near the micro cell 12 and/or use the hot spot. The handover is well known to persons skilled in the art and not directly related to the present invention. Therefore, the detailed description thereof is omitted.

Fig. 2 shows the detailed configuration of the micro cell 12. The micro radio-base-station device 2 is a radio-base station that is designed for high-speed radio communications and connected to an ordering terminal 21 and a controller 22, and that accesses the Internet via a network-access device 23, so as to pass on data between the mobile terminal 3 and the Internet network 24. Further, upon receiving the position-registration request transmitted from the mobile terminal 3, the micro radio-base-station device 2 performs position registration and/or rejects the position-registration request on the basis of user-authentication data (referred to as a token), and transmits and/or receives data to and/or from the mobile terminal 3 via radio communication by using encoded information transmitted from the controller 22.

The ordering terminal 21 is connected to the micro radio-base-station device 2 and the controller 22 and has the function of a communication scheme other than radio communications, preferably, a communication scheme which allows for performing communications only in a short range (for example, the infrared-communication scheme, the communication scheme using the IC card, and so forth). The ordering terminal 21 transmits and/or receives data (the token, the encoded information, and the terminal information) between the ordering terminal 21 and the mobile terminal 3 having the function of the communication scheme other than the radio communications, preferably, the communication scheme which allows for performing communications only in the short range (for example, the infrared-communication scheme, the communication scheme using the IC card, and so forth).

The controller 22 is connected the micro radio-base-station device 2 and the ordering terminal 21 and controls user registration by generating and/or removing the token of the mobile terminal 3 connected to the micro cell 12, and transmits and/or receives transmission-and-reception encoded information between the mobile terminal 3 and the micro radio-base-station device 2 via the ordering terminal 21. The controller 22 has a function of managing fees for communications performed between the micro radio-base-station device 2 and the mobile terminal 3.

The network-access device 23 is provided between the micro radio-base-station device 2 and the Internet network 24, and passes on data between the mobile terminal 3 and the Internet network 24.

The mobile terminal 3 transmits and/or receives data to and/or from the micro radio-base-station device 2 by using radio-communication functions that can support the mobile-phone system. Further, the mobile terminal 3 receives the token transmitted from the controller 22, and transmits and/or receives the terminal information and/or the encoded information used for communicating with the micro radio-base-station device 2 to and/or from the controller 22 via the ordering terminal 21 by using the function of the communication scheme other than the radio communications, preferably, the communication scheme which allows for performing communications only in the short range (for example, the infrared-communication scheme, the communication scheme using the IC card, and so forth).

Thus, according to the embodiment of the present invention, the mobile terminal 3 communicates with the micro radio-base-station device 2 on the basis of the token transmitted from the ordering terminal 21 and the encoded information of the radio communications, so that the following effects (1) to (3) are obtained.
(1) Whether a user trying to access the micro cell 12 should be accepted or rejected can be determined on the basis of the token. Further, operations performed by the user, so as to register the position with the micro cell 12, can be simplified.
(2) Since encoded information is not transmitted and/or received by using radio communications, the radio-communication confidentiality can be increased. Further, since the controller 22 notifies the mobile terminal 3 of the encoded information, an encoding method can be changed with flexibility and a further increase in the radio-communication confidentiality can be expected.
(3) A small-scale and low-cost system can be used so that the communication cost can be reduced.

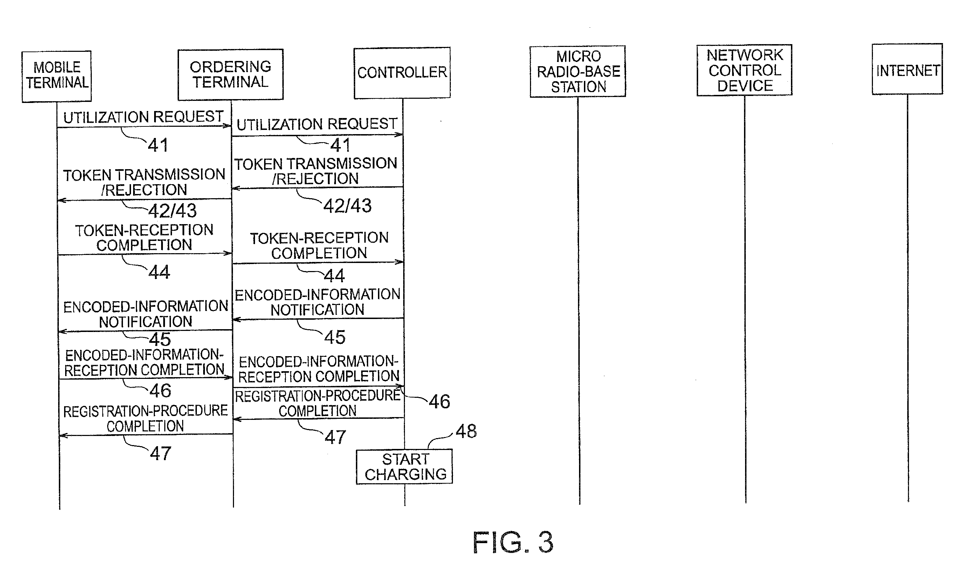

Next, operations of the user-authentication processing performed in the system shown in Fig. 2 will be described by using sequential diagrams shown in Figs. 3 to 5.

First, hot-spot utilization procedures will be described with reference to Fig. 3. The user performs the hot-spot utilization procedures through the ordering terminal 21. The controller 22 receives a utilization request 41 transmitted from the user. If the utilization request 41 is acceptable, the controller 22 transmits a token 42 used for the position registration to the ordering terminal 21. If the utilization request 41 is unacceptable, the controller 22 transmits a rejection notification 43 to the mobile terminal 3.

The user receives the position-registration token transmitted from the ordering terminal 21 by using the function of the communication scheme other than the radio communications, preferably, the communication scheme which allows for performing communications only in the short range (for example, the infrared-communication scheme, the communication scheme using the IC card, and so forth) of the mobile terminal 3, and issues a token-reception-completion notification 44 for the controller 22 via the ordering terminal 21. Terminal information of the mobile terminal 3 is added to the token-reception-completion notification.

The controller 22 is triggered by the token-reception-completion notification to transmit encoded information 45 used for performing radio communications between the micro radio-base-station device 2 and the mobile terminal 3 to the mobile terminal 3 via the ordering terminal 21. Every time, a different scheme is set, as the encoding scheme, as required.

Upon receiving the encoded information used for the radio communications, the mobile terminal 3 issues the encoded-information-reception-completion notification 46 to the controller 22 via the ordering terminal 21.

The controller 22 is triggered by the encoded-information-reception-completion notification to notify the mobile terminal 3 of a registration-procedure-completion notification 47 via the ordering terminal 21. When a hot-spot utilization fee is paid in advance, the controller 22 performs utilization-fee-charge processing 48 for the user at that time. Thus, the hot-spot utilization procedures are completed.

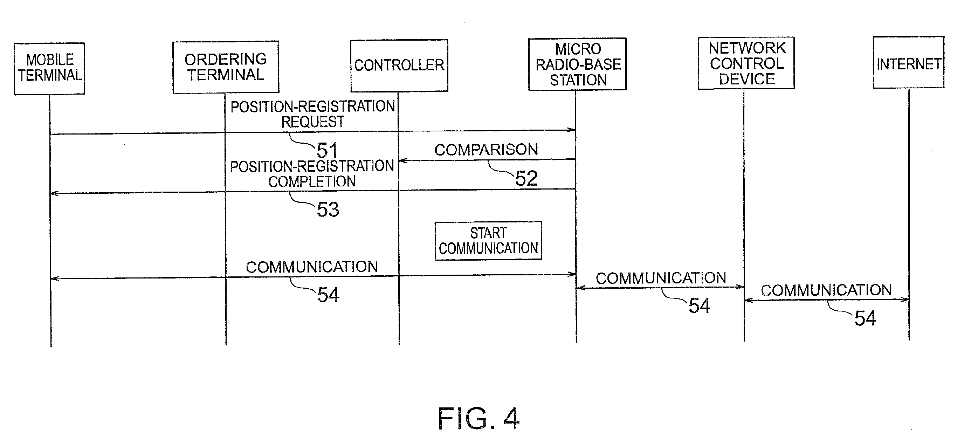

Next, position-registration procedures performed for the mobile terminal 3 will be described with reference to Fig. 4.

The mobile terminal 3 issues a position-registration request 51 with the token received by the ordering terminal to the micro radio-base-station device 2 automatically or by taking a cue from the user.

Upon receiving the position-registration request, the micro radio-base-station device 2 compares the token and the terminal information that are included in the reception data with a database provided in the controller 22. When the token and the terminal information agree with the database, the micro radio-base-station device 2 performs the position registration and notifies the mobile terminal 3 and the controller 22 of position-registration completion 53.

The mobile terminal 3 for which the position registration is completed and the micro radio-base-station device 2 performs radio communication 54 on the basis of the encoded information specified by the controller 22 during the utilization procedures.

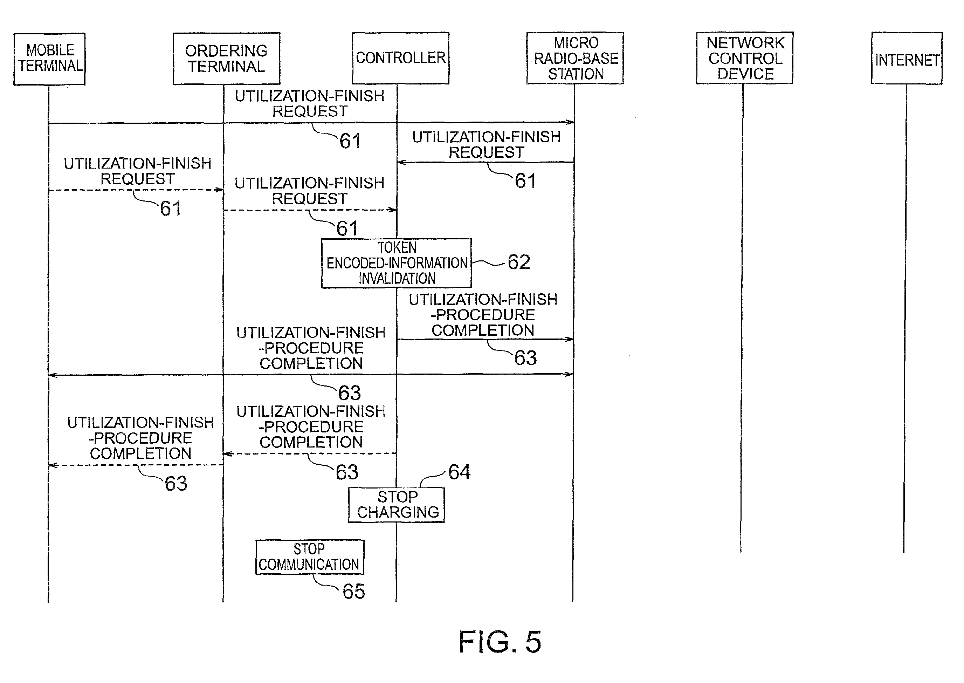

Finally, hot-spot-utilization-finish procedures will be described with reference to Fig. 5.

The mobile terminal 3 issues a utilization-finish request 61 to the controller 22 via the micro radio-base-station device 2 and/or the ordering terminal 21. Upon receiving the utilization-finish notification, the controller 22 cancels the registered position of the mobile terminal 3 and performs invalidation 62 for the token and the encoded information. Further, the controller 22 notifies the mobile terminal 3 of utilization-finish-procedure completion 63 via the micro radio-base-station device 2 and/or the ordering terminal 21.

When the hot-spot utilization fee is paid on time, the controller 22 performs utilization-fee-charge processing 64 for the user at that time. Further, the controller 22 notifies the mobile terminal 3 of the utilization fee with a utilization-finish-procedure-completion notification. Upon receiving the utilization-finish-procedure-completion notification, the mobile terminal 3 invalidates the token and the encoded information and performs communication completion 65 for communications performed between the mobile terminal 3 and the hot spot.

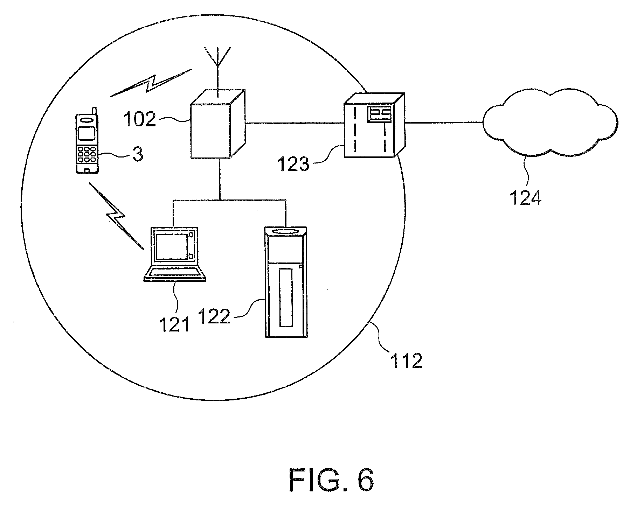

Next, another embodiment of the present invention will be described with reference to Figs. 6 to 9.

In another embodiment of the present invention, the basic configuration relating to the user authentication is the same as that of the above-described embodiment. However, the embodiment is different from the above-described embodiment in that the access destination of a network-access device is changed from the Internet to an intranet and/or a LAN of an office and/or a home.

Fig. 6 shows the detailed configuration of a micro cell 112. The micro radio-base-station device 102 is a radio-base station supporting high-speed radio communications, connected to an authentication terminal 121 and a controller 122, and connected to the intranet and/or the LAN via a network-access device 123, and passes on data between the mobile terminal 3 and the Intranet and/or the LAN 124. Further, upon receiving the position-registration request transmitted from the mobile terminal 3, the micro radio-base-station device 102 performs the position registration and/or rejects the request on the basis of the token. Further, the micro radio-base-station device 102 transmits and/or receives data between the micro radio-base-station device 102 and the mobile terminal 3 through radio communications by using the encoded information transmitted from the controller 122.

An authentication terminal 121 is connected to the micro radio-base-station device 102 and the controller 122, has the function of the communication scheme other than radio communications, preferably, the communication scheme which allows for performing communications only in the short range (for example, the infrared-communication scheme, the communication scheme using the IC card, and so forth), and transmits and/or receives data (the token, the terminal information, and the encoded information) between the micro radio-base-station device 102 and the mobile terminal 3 having the function of the communication scheme other than radio communications, (for example, the infrared-communication scheme, the communication scheme using the IC card, and so forth).

The controller 122 has functions so that the controller 122 is connected to the micro radio-base-station device 102 and the authentication terminal 121, controls the user registration by generating and/or deleting the token of the mobile terminal 3 connected to the micro cell 112, and transmits and/or receives transmission-and-reception encoded information between the mobile terminal 3 and the micro radio-base-station device 102 via the authentication terminal 121. Further, the controller 122 has a function of managing user registration information used in advance.

The network-access device 123 is provided between the micro radio-base-station device 102 and the intranet and/or the LAN 124, and passes on data between the mobile terminal 3 and the intranet and/or the LAN 124.

The mobile terminal 3 transmits and/or receives data between the mobile terminal 3 and the micro radio-base-station device 102 by using a radio-communication function supporting the mobile-phone system, receives the token transmitted from the controller 122, and transmits and/or receives the terminal information and/or the encoded information used for communicating with the micro radio-base-station device 102 between the mobile terminal 3 and the controller 122 via the authentication terminal 121 by using the function of the communication scheme other than radio communications, preferably, the communication scheme which allows for performing communications only in the short range (for example, the infrared-communication scheme, the communication scheme using the IC card, and so forth).

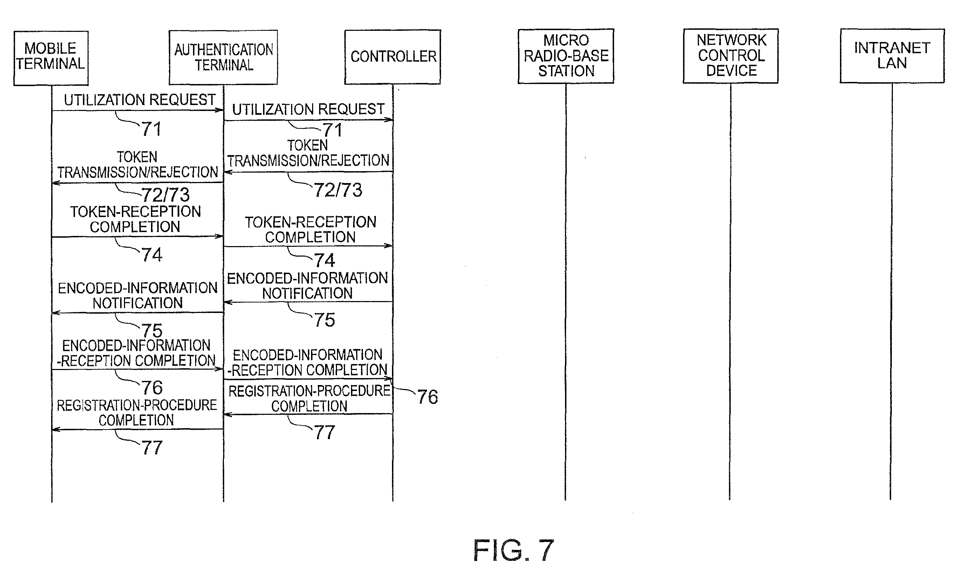

Next, user-authentication operations performed in the wireless-communication network system shown in Fig. 6 will be described by using sequential diagrams shown in Figs. 7 to 9. First, procedures for utilizing the intranet and/or the LAN 124 will be described by using Fig. 7.

The user performs the procedures for utilizing the intranet and/or the LAN 124 through the authentication terminal 121. The controller 122 receives a utilization request 71 transmitted from the user. If the controller 122 determines that the utilization request 71 is acceptable on the basis of the registration information of the user, the controller 122 transmits a token 72 for position registration to the authentication terminal 121. If the utilization request 71 is unacceptable, the controller 122 transmits a rejection notification 73 to the mobile terminal 3.

The user receives the position-registration token transmitted from the authentication terminal 121 by using the function of the communication scheme other than radio communications, preferably, the communication scheme which allows for performing communications only in the short range (for example, the infrared-communication scheme, the communication scheme using the IC card, and so forth) of the mobile terminal 3, and issues a token-reception-completion notification 74 to the controller 122 via the authentication terminal 121. The terminal information of the mobile terminal 3 is added to the token-reception-completion notification.

The controller 122 is triggered by the token-reception-completion notification to transmit encoded information 75 used for performing radio communications between the micro radio-base-station device 102 and the mobile terminal 3 to the mobile terminal 3 via the authentication terminal 121. A different method is set every time, as the encoding scheme, as required.

Upon receiving the encoded information used for the radio communications, the mobile terminal 3 issues an encoded-information-reception-completion notification 76 to the controller 122 via the authentication terminal 121. The controller 22 is triggered by the encoded-information-reception-completion notification to notify the mobile terminal 3 of a registration-procedure-completion notification 77 via the ordering terminal 121. Thus, the procedures for utilizing the intranet and/or the LAN 124 are completed.

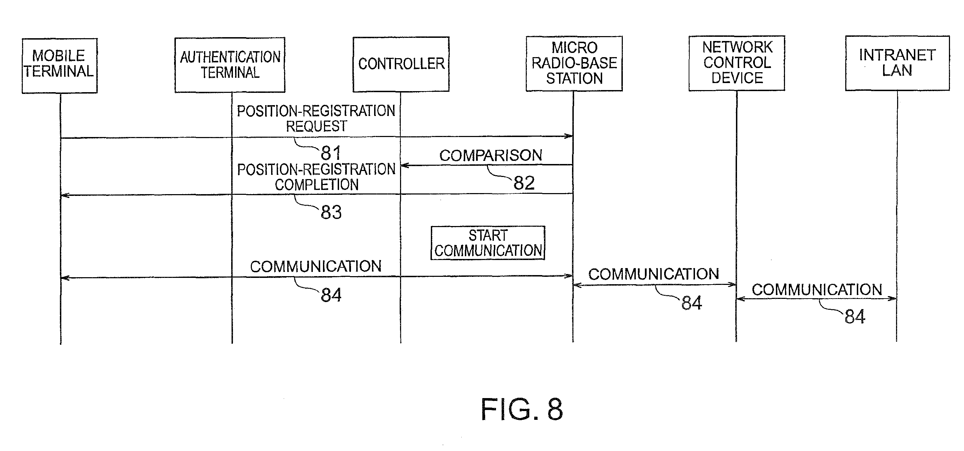

Next, position-registration procedures performed for the mobile terminal 3 will be described with reference to Fig. 8.

The mobile terminal 3 issues a position-registration request 81 with the token received by the authentication terminal 121 to the micro radio-base-station device 102 automatically or by taking a cue from the user.

Upon receiving the position-registration request, the micro radio-base-station device 102 makes a comparison 82 between the token and the terminal information that are included in the reception data with a database provided in the controller 122 performs position registration if the token and the terminal information agree with the database, and notifies the mobile terminal 3 and the controller 122 of position-registration completion 83. The mobile terminal 3 for which the position registration is completed and the micro radio-base-station device 102 perform radio communications 84 on the basis of encoded information specified by the controller 122 during the utilization procedures.

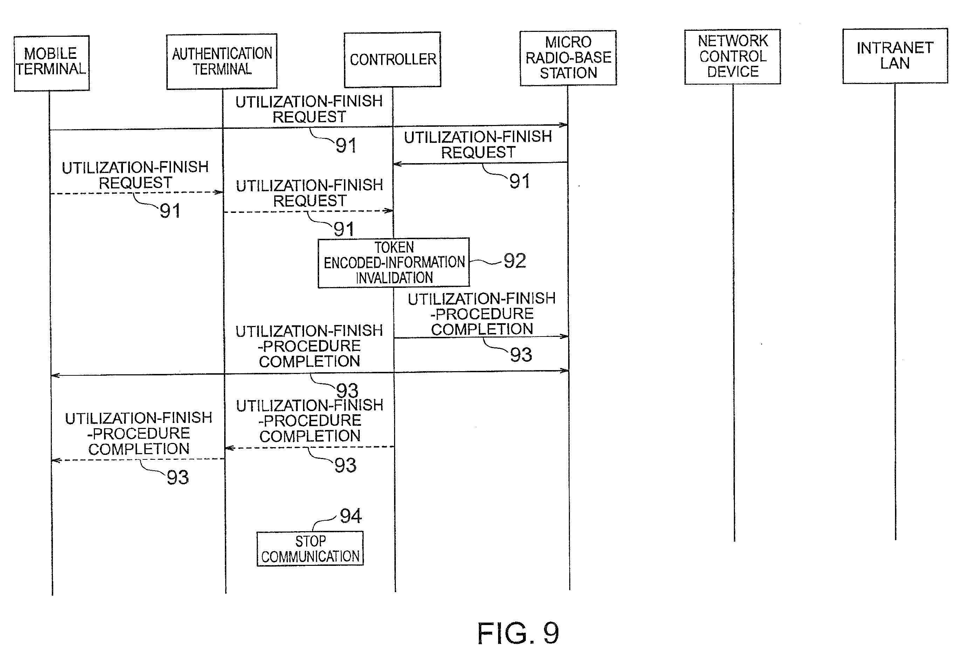

Finally, procedures performed for finishing utilization of the intranet and/or the LAN 124 will be described with reference to Fig. 9.

The mobile terminal 3 issues a utilization-finish request 91 to the controller 122 via the micro radio-base-station device 102 and/or the authentication terminal 121. Upon receiving a utilization-finish notification, the controller 122 cancels the registered position of the mobile terminal 3 and performs invalidation 92 for the token and the encoded information, and notifies the mobile terminal 3 of utilization-finish-procedure completion 93 via the micro radio-base-station device 102 and/or the authentication terminal 121.

Upon receiving the utilization-finish-procedure completion notification, the mobile terminal 3 invalidates the token and the encoded information and performs communication completion 94 for the intranet and/or the LAN 124.

Thus, in addition to the effects of the above-described embodiment, this embodiment can achieve such an effect that the same mobile terminal as the cellular mobile-phone system can be used, so as to connect to the intranet and/or the LAN 124, and a plurality of terminals need not be carried along when the user is out.

Further, a recording medium recording a computer program which makes a computer perform a communication-service-providing method used in a wireless-communication-network system constructed between the mobile terminal 3 and the micro radio-base-station device 1 via the above-described Internet network 24 may be provided. A providing medium which provides a computer program used for performing the communication-service-providing method can be distributed, as a medium that can be read by computers of various styles, and is not limited to a medium of a specific type. For example, the above-described recording medium may be either a portable medium or a fixed medium, and may be another recording medium including a compact disk, a flexible disk, a hard disk, a magneto-optical disk, a digital video disk, a magnetic tape, and a semiconductor memory.

The above-described communication-service-providing program is read from the recording medium to the mobile terminal 3, the micro radio-base-station device 1, and the controller 22, and controls processing performed by the mobile terminal 3, the micro radio-base-station device 1, and the controller 22 and performs the same processing as that performed by the above-described wireless-communication network system.

The above-described configuration applies to the computer program which makes the computer perform the communication-service-providing method used in the wireless-communication-network system constructed between the mobile terminal 3 and the micro radio-base-station device 102 via an Internet network 124.

Further, each of the above-described embodiments is provided, as an example embodiment which allows for performing the present invention in an appropriate manner. The present invention can be modified in various forms and performed without leaving the scope thereof.

The wireless-communication network system, the communication-service-providing method used in the system, the program, and the recording medium relating to the present invention can achieve the following effects.

A first effect is that member registration need not be performed in advance when using a hot spot and the amount of operations performed by the user during authentication is reduced, which provides easy utilization.

A second effect is that the communication cost can be reduced by using a small-scale and low-cost system, such as the hot spot.

A third effect is that the user-authentication data, the terminal information, and the encoded information are transmitted and/or received by using the communication scheme other than the radio communications, preferably, the communication scheme which can perform communications only in a short range (for example, the infrared-communication scheme, the communication scheme using the IC card, and so forth). Therefore, the possibility of leaking the encoded information to the third party is reduced and the communication confidentiality can be increased.

A fourth effect is that the user accessing the micro radio cell can be controlled on the hot-spot side, so that the communication-quality deterioration caused by an increased number of users and interference can be reduced.

## Claims

1. A wireless-communication network system including a radio-base-station device, a mobile terminal, an authentication terminal, a controller having a function of generating and/or deleting user-authentication data of the mobile terminal, and a micro radio-base-station device which passes on data between the mobile terminal and a communication network,
wherein the controller determines whether or not a utilization request transmitted from the authentication terminal is accepted, and transmits the user-authentication data when the utilization request is accepted, or a rejection notification when the utilization request is not accepted to the mobile terminal via the authentication terminal, and wherein;
when a user-authentication-data-reception-completion notification is transmitted from the mobile terminal, the controller transmits a user-registration-procedure-completion notification to the mobile terminal via the authentication terminal and performs processing for charging a user a utilization fee.

2. The wireless-communication network system according to Claim 1, wherein the micro radio-base-station device receives position-registration-request data to which the user-authentication data is attached from the mobile terminal, compares the user-authentication data and terminal information that are included in the position-registration-request data with a database included in the controller, performs position registration when the user-authentication data and the terminal information agree with the database, and transmits a position-registration-completion notification to the mobile terminal and the controller, and wherein; radio communication is started between the mobile terminal which received the position-registration-completion notification and the micro radio-base-station device.

3. The wireless-communication network system according to Claim 2, wherein the mobile terminal transmits utilization-finish-request data to the controller via the micro radio-base-station device, or the ordering terminal,
wherein the controller cancels the registered position of the mobile terminal which received the utilization-finish notification, invalidates the user-authentication data, and transmits a utilization-finish-procedure-completion notification to the mobile terminal via the micro-radio-base-station device and/or the ordering terminal,
wherein when the utilization fee is paid on time, the controller performs processing for charging the user the utilization fee, and transmits the utilization-finish-procedure-completion notification and utilization-fee-statement data to the mobile terminal, and
wherein the mobile terminal invalidates the user-authentication data and finishes communicating with a hot spot.

4. The wireless-communication network system according to any one of Claims 1 to 3, wherein the data transmission and/or reception is performed between the mobile terminal and the authentication terminal by using a communication scheme other than radio communication.

5. The wireless-communication network system according to Claim 4, wherein the communication scheme other than the radio communication is infrared communication and/or communication using an IC card.

6. A wireless-communication network system including a radio-base-station device, a mobile terminal, an authentication terminal, a controller having a function of generating and/or deleting user-authentication data of the mobile terminal, and a micro radio-base-station device which passes on data between the mobile terminal and a communication network,
wherein the controller
determines whether or not a utilization request transmitted from the authentication terminal is accepted, and transmits the user-authentication data when the utilization request is accepted, or a rejection notification when the utilization request is not accepted to the mobile terminal via the authentication terminal,
transmits encoded-information data used for radio communication performed between the micro-radio-base-station device and the mobile terminal to the mobile terminal upon receiving user-authentication-data-reception completion notification transmitted from the mobile terminal, and
transmits a user-registration-procedure-completion notification to the mobile terminal via the authentication terminal and performs processing for charging a user a utilization fee upon receiving an encoded-information-reception-completion notification transmitted from the mobile terminal.

7. The wireless-communication network system according to Claim 6, wherein the micro radio-base-station device receives position-registration-request data transmitted from the mobile terminal, where the user-authentication data is attached to the position-registration-request data, compares the user-authentication data and terminal information that are included in the position-registration-request data with a database included in the controller, performs position registration when the user-authentication data and the terminal information agree with the database, and transmits a position-registration-completion notification to the mobile terminal and the controller, and
wherein radio communication is started between the mobile terminal which received the position-registration-completion notification and the micro radio-base-station device on the basis of the encoded-information data.

8. The wireless-communication network system according to Claim 7, wherein the mobile terminal transmits utilization-finish-request data to the controller via the micro radio-base-station device, or the ordering terminal,
wherein the controller cancels the registered position of the mobile terminal which received the utilization-finish notification, invalidates the user-authentication data and the encoded-information data, and transmits a utilization-finish-procedure-completion notification to the mobile terminal via the micro radio-base-station device and/or the ordering terminal,
wherein when the utilization fee is paid on time, the controller performs processing for charging the user the utilization fee, and transmits the utilization-finish-procedure-completion notification and utilization-fee-statement data to the mobile terminal, and
wherein the mobile terminal invalidates the user-authentication data and the encoded-information data, and finishes communicating with a hot spot.

9. A wireless-communication network system according to any one of Claims 6 to 8, wherein the communication network includes the Internet, an intranet, and a LAN.

10. A controller of a wireless-communication network system that is connected to an authentication terminal and a micro radio-base station and that passes on data between a mobile terminal and a communication network, the controller comprising:
a function of generating and/or deleting user-authentication data of the mobile terminal,
wherein the controller determines whether or not a utilization request transmitted from the authentication terminal is accepted, and transmits the user-authentication data when the utilization request is accepted, or a rejection notification when the utilization request is not accepted to the mobile terminal via the authentication terminal, and
wherein when a user-authentication-data-reception completion notification is transmitted from the mobile terminal, the controller transmits a user-registration-procedure-completion notification to the mobile terminal via the authentication terminal and performs processing for charging a user a utilization fee.

11. A controller of a wireless-communication network system that is connected to an authentication terminal and a micro radio base station and that passes on data between a mobile terminal and a communication network, the controller comprising:
a function of generating and/or deleting user-authentication data of the mobile terminal,
wherein the controller determines whether or not a utilization request transmitted from the authentication terminal is accepted, and transmits the user-authentication data when the utilization request is accepted, or a rejection notification when the utilization request is not accepted to the mobile terminal via the authentication terminal,
wherein when a user-authentication-data-reception completion notification is transmitted from the mobile terminal, the controller transmits encoded-information data used for radio communication performed between the micro radio-base-station device and the mobile terminal to the mobile terminal, and
wherein when an encoded-information-reception-completion notification is transmitted from the mobile terminal, the controller transmits a user-registration-procedure-completion notification to the mobile terminal via the authentication terminal and performs processing for charging a user a utilization fee.

12. A communication-service-providing method used in a wireless-communication network system constructed between a mobile terminal and a micro radio-base-station device via a communication network, the communication-service-providing method comprising the steps of:
determining whether or not a utilization request transmitted from an authentication terminal connected to the micro radio-base-station device is accepted, and transmitting the user-authentication data when the utilization request is accepted, or a rejection notification when the utilization request is not accepted to the mobile terminal via the authentication terminal;
transmitting a user-authentication-data-reception-completion notification to a controller connected to the micro radio-base-station device upon receiving the user-authentication data;
transmitting encoded-information data used for radio communication performed between the micro radio-base-station device and the mobile terminal upon receiving the user-authentication-data-reception-completion notification;
transmitting an encoded-information-reception-completion notification to the controller via the authentication terminal upon receiving the encoded-information data; and
receiving the encoded-information-reception-completion notification, transmitting a user-registration-procedure-completion notification to the mobile terminal via the authentication terminal, and performing processing for charging a user a utilization fee.

13. The communication-service-providing method used in the wireless-communication network system according to Claim 12, the communication-service-providing method comprising the steps of:
transmitting position-registration-request data including the user-authentication data and terminal information from the mobile terminal;
comparing the user-authentication data and the terminal information that are included in the transmitted position-registration-request data with a database included in the controller;
performing position registration and transmitting a position-registration-completion notification to the mobile terminal and the controller when the user-authentication data and the terminal information agree with the database, and
starting the radio communication between the mobile terminal which received the position-registration-completion notification and the micro radio-base-station device.

14. The communication-service-providing method used in the wireless-communication network system according to Claim 13, further comprising the steps of:
transmitting utilization-finish-request data from the mobile terminal to the controller;
cancelling the registered position of the mobile terminal which received a utilization-finish notification transmitted from the controller;
invalidating the user-authentication data and the encoded-information data;
transmitting a utilization-finish-procedure-completion notification to the mobile terminal;
performing processing for charging the user the utilization fee when the utilization fee is paid on time;
transmitting the utilization-finish-procedure-completion notification and utilization-fee-statement data to the mobile terminal; and
invalidating the user-authentication data and the encoded-information data, and finishing the communication after receiving the utilization-finish-procedure-completion notification.

15. The communication-service-providing method used in the wireless-communication network system according to any one of Claims 12 to 14, wherein the communication network includes the Internet, an intranet, and a LAN.

16. A program which makes a computer perform communication-service-providing processing in a wireless-communication network system constructed between a mobile terminal and a micro radio-base-station device via a communication network, the program comprising the steps of:
determining whether or not a utilization request transmitted from an authentication terminal connected to the micro radio-base-station device is accepted, and transmitting the user-authentication data when the utilization request is accepted, or a rejection notification when the utilization request is not accepted to the mobile terminal via the authentication terminal;
transmitting a user-authentication-data-reception-completion notification to a controller connected to the micro radio-base-station device upon receiving the user-authentication data;
transmitting encoded-information data used for radio communication performed between the micro radio-base-station device and the mobile terminal upon receiving the user-authentication-data-reception-completion notification;
transmitting encoded-information-reception-completion notification to the controller via the authentication terminal upon receiving the encoded-information data; and
receiving the encoded-information-reception-completion notification, transmitting a user-registration-procedure-completion notification to the mobile terminal via the authentication terminal, and performing processing for charging a user a utilization fee.

17. The program according to Claim 16, further making the computer performs the steps of:
transmitting position-registration-request data including the user-authentication data and terminal information from the mobile terminal;
comparing the user-authentication data and the terminal information that are included in the transmitted position-registration-request data with a database included in the controller;
performing position registration and transmitting a position-registration-completion notification to the mobile terminal and the controller when the user-authentication data and the terminal information agree with the database, and
starting the radio communication between the mobile terminal which received the position-registration-completion notification and the micro radio-base-station device.

18. The program according to Claim 17, further making the computer performs the steps of:
transmitting utilization-finish-request data from the mobile terminal to the controller;
cancelling the registered position of the mobile terminal which received a utilization-finish notification transmitted from the controller;
invalidating the user-authentication data and the encoded-information data;
transmitting a utilization-finish-procedure-completion notification to the mobile terminal;
performing processing for charging the user the utilization fee when the utilization fee is paid on time;
transmitting the utilization-finish-procedure-completion notification and utilization-fee-statement data to the mobile terminal; and
invalidating the user-authentication data and the encoded-information data, and finishing the communication after receiving the utilization-finish-procedure-completion notification.

19. A computer-readable information-recording medium (including a compact disk, a flexible disk, a hard disk, a magneto-optical disk, a digital video disk, a magnetic tape, and a semiconductor memory) on which the program according to any one of Claims 16 to 18 is recorded.
